# FASCICULE DE BREVET EUROPEEN

(11) **EP 1 675 880 B1**
(45) Date de publication et mention de la délivrance du brevet: **13.03.2019**
(21) Numéro de dépôt: 04805254.2
(22) Date de dépôt: 21.10.2004
(51) Int. Cl.: C08F 8/06

(54) **PROCEDE POUR OXYDER PARTIELLEMENT OU TOTALEMENT UNE OU PLUSIEURS EXTREMITES THIOCARBONYLTHIO D'UN POLYMERE ISSU D'UNE POLYMERISATION RADICALAIRE CONTROLEE PAR ADDITION-FRAGMENTATION REVERSIBLE**
VERFAHREN ZUR OXIDISIERUNG VON POLYMERE MIT DITHIOCARBONYL-ENDGRUPPE UND HERSTELLUNG DURCH RADIKALPOLYMERISATION MIT ADDITION-FRAGMENTATIONSMITTELN
METHOD FOR PARTIAL OR TOTAL OXIDATION OF ONE OR SEVERAL THIOCARBONYLTHIO ENDS OF A POLYMER OBTAINED BY RADICAL POLYMERISATION CONTROLLED BY REVERSIBLE ADDITION-CLEAVAGE

(30) Priorité: 22.10.2003 FR 0312338
(43) Date de publication de la demande: 05.07.2006
(73) Titulaire: RHODIA CHIMIE, 92512 Boulogne Billancourt Cedex (FR)
(72) Inventeur: ZARD, Samir, 91190 Gif sur Yvette (FR); SIRE, Béatrice, 91120 Palaiseau (FR); JOST, Philippe, 69003 Lyon (FR)
(74) Mandataire: Cardon, Flavie
(86) Numéro de dépôt international: PCT/FR2004/002690
(87) Numéro de publication internationale: WO 2005/040233

(56) Documents cités:
- WO-A-02/090397
- US-A- 3 776 874
- US-A- 5 618 898

## Description

Dans le domaine de la polymérisation vivante ou contrôlée, de nombreuses architectures de polymères peuvent être obtenues, mais les conditions de synthèse sont parfois difficiles à mettre en oeuvre industriellement. Par exemple, le procédé de polymérisation anionique est très sensible à la présence d'impuretés telle que l'eau. Egalement, l'élimination du catalyseur en fin de procédé de polymérisation radicalaire par transfert d'atome (ATRP) rend difficile son industrialisation.

Les technologies d'addition-fragmentation réversible contrôlées par des agents thiocarbonylthio ont donc représenté un progrès dans le domaine de la polymérisation radicalaire car elles fonctionnent dans une très vaste gamme de conditions (solvants, monomères, procédé, etc) et à un coût raisonnable.

Cependant, un inconvénient de ces technologies est qu'après polymérisation l'agent thiocarbonylthio utilisé pour contrôler la polymérisation est toujours présent dans les chaînes polymères et n'est pas chimiquement stable. En particulier, il peut se dégrader sous l'effet d'agents chimiques ou de radiations UV et provoquer des odeurs ou un jaunissement du polymère, ou une modification des propriétés du polymère.

Un des buts de la présente invention est de modifier l'agent thiocarbonylthio présent dans les chaînes de polymères pour le rendre chimiquement stable et éviter ainsi qu'il ne se dégrade sous l'effet d'agents chimiques ou de radiations UV et provoque des odeurs ou un jaunissement du polymère, ou une modification des propriétés du polymère.

Auparavant, plusieurs approches ont été envisagées afin de traiter chimiquement les polymères à extrémité thicarbonylthio.

On peut par exemple citer l'utilisation d'amine primaire ou secondaire comme cela est décrit dans le document Chiefari et co-auteurs, Macromolecules 1998, 31, 5559, ainsi que dans les références citées dans ce document. On peut également citer l'utilisation d'ammoniaque comme cela est décrit dans le document WO 03/070780.

Cependant, ces approches présentent l'inconvénient d'avoir à séparer les sous-produits de réaction ainsi que les réactifs en excès mis en jeu.

La demande de brevet WO 02/090924 de la Demanderesse décrit l'utilisation en polymérisation contrôlée par addition-fragmentation réversible d'un agent de contrôle xanthate porteur d'un groupement O-alkyl obtenu à partir d'un alcool secondaire par simple élévation de température, l'extrémité xanthate en bout de chaîne est convertie en extrémité thiol. Un des inconvénients d'une telle approche est la température élevée à laquelle cette transformation a lieu, généralement bien au delà de 100°C.

La demande de brevet WO 02/090397 de la Demanderesse décrit la réduction radicalaire de l'extrémité thiocarbonylthio d'un polymère en présence d'un système composé d'un amorceur radicalaire, généralement peroxydique et d'un composé porteur d'un atome d'hydrogène labile, par exemple un alcool secondaire. L'inconvénient de cette approche est la nécessité de concentrations importantes en composé donneur d'hydrogène d'une part, et d'autre part d'avoir à gérer l'élimination des sous-produits soufrés issus de la réaction du milieu réactionnel.

Le document brevet WO 02/090397 A décrit un procédé de préparation d'un polymère comportant une fonction dithiocarbonyle aux extrémités de chaînes obtenu par copolymérisation radicalaire de monomères en présence d'un agent de transfert de chaîne de type dithioester, xanthate, dithiocarbamate ou thioether-thione. Les polymères peuvent subir ensuite une réaction de réduction en présence d'alcool ou d'acétal.

Le document brevet US 5 618 898 A divulgue un procédé d'oxydation d'un polymère comportant une fonction thio éther aux extrémités de chaînes. Ces polymères sont préparés par copolymérisation radicalaire de monomères tels que les esters d'acide acrylique, l'acide acrylique et le styrène en présence d'un agent de transfert de chaîne. Le copolymère subit ensuite une étape d'oxydation en présence d'ozone ou d'un peracide pour former un polymère ayant une fonction sulfone aux extrémités de chaînes.

Enfin, lorsque les polymères sont en dispersion ou en émulsion, les réactifs usuels ne diffusent pas ou très partiellement ou lentement dans les particules ou risquent de déstabiliser la dispersion ou l'émulsion de polymère.

Un autre but de l'invention est de trouver un moyen de modifier l'agent thiocarbonylthio présent dans les chaînes de polymères pour le rendre chimiquement stable, ce moyen ne modifiant pas la structure du polymère ou ses propriétés.

Un autre but de l'invention est de trouver un moyen de modifier l'agent thiocarbonylthio présent dans les chaînes de polymères pour le rendre chimiquement stable, ce moyen ne nécessitant pas de mettre en oeuvre des étapes de purification du réactif utilisé qui n'a pas été consommé.

Un autre but de l'invention est de trouver un moyen de modifier l'agent thiocarbonylthio présent dans les chaînes de polymères pour le rendre chimiquement stable, ce moyen pouvant s'appliquer à un polymère quelque soit sa forme c'est à dire en solution, en dispersion ou en émulsion.

Un autre but de l'invention est de trouver un moyen de modifier l'agent thiocarbonylthio présent dans les chaînes de polymères pour le rendre chimiquement stable, ce moyen pouvant s'appliquer à une vaste gamme de natures chimiques de polymères.

Ces buts et d'autres sont atteints par la présente invention qui a donc pour objet un procédé pour oxyder partiellement ou totalement une ou plusieurs extrêmités thiocarbonylthio d'au moins un polymère issu d'une polymérisation radicalaire contrôlée par addition-fragmentation réversible à l'aide d'agents thiocarbonylthio, comprenant une étape de mise en contact dudit polymère avec un gaz comprenant de l'ozone au cours de laquelle l'ozone réagit avec la ou les extrémités thiocarbonylthio.

Les agents thiocarbonylthio sont accrochés par liaison chimique à une extrémité de la chaîne du polymère à l'issue de la polymérisation radicalaire par un procédé de type transfert réversible par addition-fragmentation.

Parmi les agents thiocarbonylthio utilisés dans la polymérisation radicalaire par un procédé de type transfert réversible par addition-fragmentation, on peut notamment citer les agents dithioester de formule RS(C=S)R', tels que décrits dans les demandes de brevets WO 98/01478 et WO 99/35178, les xanthates RS(C=S)OR', tels que décrits dans les demandes de brevets WO 98/58974, WO 00/75207 et WO 01/42312, les dithiocarbamates de formule RS(C=S)NR₁R₂, tels que ceux décrits dans les demandes de brevets WO 99/35177 et WO 99/31144, les composés thioether-thiones, tels que ceux décrits dans la demande de brevet FR 2794464, déposée au nom de la société Rhodia Chimie, ou les composés dithiocarbazates tels que ceux décrits dans la demande de brevet WO 02/26836 déposée au nom de la société SYMYX.

Ainsi, les agents thiocarbonylthio sont des composés qui peuvent être de formules (A), (B), ou (C) suivantes : 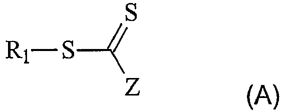 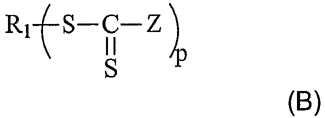 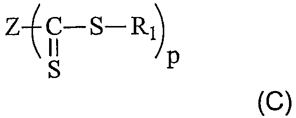 dans lesquelles :
- Z représente :
   - un atome d'hydrogène,
   - un atome de Chlore,
   - un radical alkyl éventuellement substitué, aryl éventuellement substitué,
   - un hétérocycle éventuellement substitué,
   - un radical alkylthio éventuellement substitué,
   - un radical arylthio éventuellement substitué,
   - un radical alkoxy éventuellement substitué,
   - un radical aryloxy éventuellement substitué,
   - un radical amino éventuellement substitué,
   - un radical hydrazine éventuellement substitué,
   - un radical alkoxycarbonyl éventuellement substitué,
   - un radical aryloxycarbonyl éventuellement substitué,
   - un radical carboxy, acyloxy éventuellement substitué,
   - un radical aroyloxy éventuellement substitué,
   - un radical carbamoyle éventuellement substitué,
   - un radical cyano,
   - un radical dialkyl- ou diaryl-phosphonato,
   - un radical dialkyl-phosphinato ou diaryl-phosphinato, ou
   - une chaîne polymère,
- R₁ représente :
   - un groupe alkyle, acyle, aryle, aralkyle, alcène ou alcyne éventuellement substitué,
   - un cycle carboné ou un hétérocycle, saturé ou non, aromatique éventuellement substitué,
   - une chaîne polymère,
- p représente un nombre compris entre 2 et 10.

Les groupes R₁ ou Z, lorsqu'ils sont substitués, peuvent être substitués par des groupes phényles éventuellement substitués, des groupes aromatiques éventuellement substitués, des cycles carbonés saturés ou non, des hétérocycles saturé ou non, ou des groupes : alkoxycarbonyle ou aryloxycarbonyle (-COOR), carboxy (-COOH), acyloxy (-O₂CR), carbamoyle (-CONR₂), cyano (-CN), alkylcarbonyle, alkylarylcarbonyle, arylcarbonyle, arylalkylcarbonyle, phtalimido, maleïmido, succinimido, amidino, guanidimo, hydroxy (-OH), amino (-NR₂), halogène, perfluoroalkyle CₙF₂ₙ₊₁, allyle, époxy, alkoxy (-OR), S-alkyle, S-aryle, des groupes présentant un caractère hydrophile ou ionique tels que les sels alcalins d'acides carboxyliques, les sels alcalins d'acide sulfonique, les chaînes polyoxyde d'alkylène (PEO, POP), les substituants cationiques (sels d'ammonium quaternaires), R représentant un groupe alkyle ou aryle, ou une chaîne polymère.

Selon un mode de réalisation particulier, R₁ est un groupe alkyle substitué ou non, de préférence substitué.

Les composés (A) utiles dans la présente invention sont par exemple les composés dans lesquels R₁ est choisi parmi :
- CH₂C₆H₅
- CH(CH₃)(CO₂Et)
- CH(CH₃)(C₆H₅)
- CH(CO₂Et)₂
- C(CH₃)(CO₂Et)(S-C₆H₅)
- C(CH₃)₂(C₆H₅)
- C(CH₃)₂CN 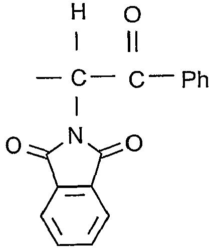 dans lesquelles Et représente un groupe éthyle et Ph représente un groupe phényle.

Les groupes alkyle, acyle, aryle, aralkyle ou alcyne éventuellement substitués présentent généralement 1 à 20 atomes de carbone, de préférence 1 à 12, et plus préférentiellement 1 à 9 atomes de carbone. Ils peuvent être linéaires ou ramifiés. Ils peuvent être également substitués par des atomes d'oxygène, sous forme notamment d'esters, des atomes de soufre ou d'azote.

Parmi les radicaux alkyle, on peut notamment citer le radical méthyle, éthyle, propyle, butyle, pentyle, isopropyle, tert-butyle, pentyle, hexyle, octyle, decyle ou dodécyle.

Les groupes alcynes sont des radicaux généralement de 2 à 10 atomes de carbone, ils présentent au moins une insaturation acétylénique, tel que le radical acétylenyle.

Le groupe acyle est un radical présentant généralement de 1 à 20 atomes de carbone avec un groupement carbonyle.

Parmi les radicaux aryle, on peut notamment citer le radical phényle, éventuellement substitué notamment par une fonction nitro ou hydroxyle.

Parmi les radicaux aralkyle, on peut notamment citer le radical benzyle ou phénéthyle, éventuellement substitué notamment par une fonction nitro ou hydroxyle.

Lorsque R₁ ou Z est une chaîne polymère, cette chaîne polymère peut être issue d'une polymérisation radicalaire ou ionique ou issue d'une polycondensation.

Dans le cadre de la présente invention, parmi les agents thiocarbonylthio on préfère les xanthates (famille où Z représente un radical alkoxy ou aryloxy éventuellement substitué), les dithiocarbamates (famille où Z représente un radical amino éventuellement substitué), les dithioesters (famille où Z représente un radical alkyl ou aryl éventuellement substitué), les dithiocarbazates (famille où Z représente un radical hydrazine éventuellement substitué), et les trithiocarbonates (famille où Z représente un radical alkylthio ou arylthio éventuellement substitué). Les composés thiocarbonylthio les plus préférés sont les xanthates.

Le polymère sur le quel est accroché l'agent thiocarbonylthio à l'issue de la polymérisation peut être un homopolymère ou un copolymère de monomère(s) éthyléniquement insaturé(s).

Il est également possible dans le procédé de l'invention de traiter par l'ozone un mélange de plusieurs polymères.

Les monomères éthyléniquement insaturés utilisés dans le procédé de la présente invention sont tous les monomères qui polymérisent en présence de l'agent de contrôle thiocarbonylthio, pour donner des chaînes polymères actives.

Ces monomères éthyléniquement insaturés sont par exemple des monomères monoéthyléniquements insaturés choisis parmis :
- le styrène et les dérivés du styrène comme l'alphaméthylstyrène ou le vinyltoluène
- les esters vinyliques d'acide carboxylique comme l'acétate de vinyle, le Versatate® de vinyle, le propionate de vinyle,
- les halogénures de vinyle et de vinylidène,
- les acides mono- et di- carboxyliques insaturés éthyléniques comme l'acide acrylique, l'acide méthacrylique, l'acide itaconique, l'acide maléique, l'acide fumarique et les mono-alkylesters des acides dicarboxyliques du type cité avec les alcanols ayant de préférence 1 à 4 atomes de carbone et leurs dérivés N-substitués,
- les amides des acides carboxyliques insaturés comme l'acrylamide, le méthacrylamide, le N-méthylolacrylamide ou méthacrylamide, les N-alkylacrylamides.
- les monomères éthyléniques comportant un groupe acide sulfonique et ses sels alcalins ou d'ammonium par exemple l'acide vinylsulfonique, l'acide vinylbenzène sulfonique, l'acide alpha-acrylamido méthylpropane-sulfonique, le 2-sulfoéthylène-méthacrylate,
les amides de la vinylamine, notamment le vinylformamide, le vinylacétamide, la N-vinylpyrrolidone et la N-vinylcaprolactame,
les monomères éthyléniques insaturés comportant un groupe amino secondaire, tertiaire ou quaternaire, ou un groupe hétérocyclique contenant de l'azote tel que par exemple les vinylpyridines, le vinylimidazole, les (méth)acrylates d'aminoalkyle et les (méth)acrylamides d'aminoalkyle comme le diméthylaminoéthyl-acrylate ou -méthacrylate, le ditertiobutylaminoéthyl-acrylate ou -méthacrylate, le diméthylamino méthyl-acrylamide ou -méthacrylamide, ou des monomères zwitterioniques comme par exemple l'acrylate de sulfopropyl (diméthyl)aminopropyle,
- les esters (méth)acryliques, tels que l'acrylate de glycidyle ou le méthacrylate de glycidyle,
- les nitriles vinyliques,
- les monomères comprenant au moins une fonction boronate ou un précurseur choisis, par exemple, parmi l'acide acryloylbenzène boronique, l'acide méthacryloylbenzène boronique, l'acide vinyl-4 benzène boronique, l'acide 3-acrylamido phényl boronique, l'acide 3-méthacrylamido phényl boronique, seuls ou en mélanges, ou sous forme de sels,
- les monomères comprenant des phosphonates, choisis par exemple parmi les dérivés N-methacrylamidomethylphosphonic acid esters, en particulier l'ester n-propylique (RN 31857-11-1), l'ester méthylique (RN 31857-12-2), l'ester éthylique (RN 31857-13-3), l'ester n-butylique (RN 31857-14-4), l'ester isopropylique (RN 51239-00-0), ainsi que leurs dérivés monoacide et diacide phosphonique, tel le N-methacrylamidomethylphosphonic diacid (RN 109421-20-7) ; les dérivés N-methacrylamidoethylphosphonic acid esters, tel le N-methacrylamidoethyl phosphonic acid dimethyl ester (RN 266356-40-5), le N-methacrylamidoethyl phosphonic acid di(2-butyl-3,3-dimethyl) ester (RN 266356-45-0), ainsi que leurs dérivés monoacide et diacide phosphonique, tel le N-methacrylamidoethylphosphonic diacid (RN 80730-17-2); les dérivés N-acrylamidomethylphosphonic acid esters tels le N-acrylamidomethyl phosphonic acid dimethyl ester (RN 24610-95-5), le N-acrylamidomethyl phosphonic acid diethyl ester (RN 24610-96-6), le bis(2-chloropropyl) N-acrylamidomethyl phosphonate (RN 50283-36-8), ainsi que leurs dérivés monoacide et diacide phosphonique tel le N-acrylamidomethyl phosphonic acid (RN 151752-38-4); les dérivés vinylbenzylphosphonate dialkyl ester, en particulier les dérivés di(n-propyl) (RN 60181-26-2), di(isopropyl) (RN 159358-34-6), diethyl (RN 726-61-4), dimethyl (RN 266356-24-5), di(2-butyl-3,3-dimethyl) (RN 266356-29-0) et di (t-butyl) ester (RN 159358-33-5), ainsi que leurs variantes monoacide et diacide phosphonique, tel le vinylbenzylphosphonic diacid (RN 53459-43-1) ; le diéthyl 2-(4-vinylphenyl)ethanephosphonate (RN 61737-88-0); les dérivés dialkylphosphonoalkyl acrylates et méthacrylates, tel le 2-(acryloyloxy)ethylphosphonic acid dimethyl ester (RN 54731-78-1) et le 2-(methacryloyloxy)ethylphosphonic acid dimethyl ester (RN 22432-83-3), le 2-(methacryloyloxy)methylphosphonic acid diethyl ester (RN 60161-88-8), le 2-(methacryloyloxy)methylphosphonic acid dimethyl ester (RN 63411-25-6), le 2-(methacryloyloxy)propylphosphonic acid dimethyl ester (RN 252210-28-9), le 2-(acryloyloxy)methylphosphonic acid diisopropyl ester (RN 51238-98-3), le 2-(acryloyloxy) ethylphosphonic acid diethyl ester (RN 20903-86-0), ainsi que leurs variantes monoacide et diacide phosphonique, tel le 2-(methacryloyloxy)ethylphosphonic acid (RN 80730-17-2), le 2-(methacryloyloxy)methylphosphonic acid (RN 87243-97-8), le 2-(methacryloyloxy)propylphosphonic acid (RN 252210-30-3), le 2-(acryloyloxy)propylphosphonic acid (RN 254103-47-4) et le 2-(acryloyloxy)ethylphosphonic acid ; l'acide vinyl phosphonique, éventuellement substitué par des groupements cyano, phényle, ester ou acétate, l'acide vinylidene phosphonique, sous forme de sel de sodium ou son ester isopropylique, le vinylphosphonate de bis(2-chloroéthyle), ces monomères à fonction mono ou diacide phosphonique pouvant être utilisés sous forme neutralisée, partiellement ou totalement, éventuellement par une amine, par exemple la dicyclohexylamine,
- les monomères choisis parmi les analogues phosphates des monomères phosphonatés décrits ci-dessus, les monomères comportant alors un enchaînement -C-O-P- comparativement à l'enchaînement -C-P- des phosphonates, et
- les monomères porteurs d'un groupe alcoxysilane choisi parmi le méthacrylate de triméthoxysilylpropyle, le méthacrylate de triéthoxysilylpropyle, le méthacrylate de tributoxysilylpropyle, le méthacrylate de diméthoxyméthylsilylpropyle, le méthacrylate de diéthoxyméthylsilylpropyle, le méthacrylate de dibutoxyméthylsilylpropyle, le méthacrylate de diisopropoxyméthylsilylpropyle, le méthacrylate de diméthoxysilylpropyle, le méthacrylate de diéthoxysilylpropyle, le méthacrylate de dibutoxysilylpropyle, le méthacrylate de diisopropoxysilylpropyle, le méthacrylate de triméthoxysilylpropyle, le méthacrylate de triéthoxysilylpropyle, le méthacrylate de tributoxysilylpropyle, l'acrylate de triméthoxysilylpropyle, l'acrylate de triéthoxysilylpropyle, l'acrylate de tributoxysilylpropyle, l'acrylate de diméthoxyméthylsilylpropyle, l'acrylate de diéthoxyméthylsilylpropyle, l'acrylate de dibutoxyméthylsilylpropyle, l'acrylate de diisopropoxyméthylsilylpropyle, l'acrylate de diméthoxysilylpropyle, l'acrylate de diéthoxysilylpropyle, l'acrylate de dibutoxysilylpropyle, l'acrylate de diisopropoxysilylpropyle, l'acrylate de triméthoxysilylpropyle, l'acrylate de triéthoxysilylpropyle, ou l'acrylate de tributoxysilylpropyle.

Par esters (méth)acryliques, on désigne les esters de l'acide acrylique et de l'acide méthacrylique avec les alcools en C₁-C₁₂ hydrogénés ou fluorés, de préférence C₁-C₈. Parmi les composés de ce type, on peut citer : l'acrylate de méthyle, l'acrylate d'éthyle, l'acrylate de propyle, l'acrylate de n-butyle, l'acrylate d'isobutyle, l'acrylate de 2-éthylhexyle, l'acrylate de t-butyle, le méthacrylate de méthyle, le méthacrylate d'éthyle, le méthacrylate de n-butyle, le méthacrylate d'isobutyle.
Les nitriles vinyliques incluent plus particulièrement ceux ayant de 3 à 12 atomes de carbone, comme en particulier l'acrylonitrile et le méthacrylonitrile.
Pour la préparation de blocs polyvinylamines, on utilise de préférence à titre de monomères éthyléniquement insaturés les amides de la vinylamine, par exemple le vinylformamide ou le vinylacétamide. Puis, le polymère obtenu est hydrolysé à pH acide ou basique.
Pour la préparation de blocs poly (alcool vinylique), on utilise de préférence à titre de monomères éthyléniquement insaturés les esters vinyliques d'acide carboxylique, comme par exemple l'acétate de vinyle. Puis, le polymère obtenu est hydrolysé à pH acide ou basique.

De préférence, les monomères éthyléniquement insaturés utilisés sont choisis parmi les monomères styréniques, les esters vinyliques, les acrylates hydrophiles neutres ou chargés, les acrylates hydrophobes, les méthacrylates hydrophiles neutres ou chargés, les méthacrylates hydrophobes, les acrylamido hydrophiles, hydrophobes, neutres ou chargés, les méthacrylamido hydrophiles, hydrophobes, neutres ou chargés.

Les types et quantités de monomères polymérisables mis en oeuvre selon la présente invention varient en fonction de l'application finale particulière à laquelle est destiné le polymère. Ces variations sont bien connues et peuvent être facilement déterminées par l'homme du métier.

Ces monomères éthyléniquement insaturés peuvent être utilisés seuls ou en mélanges.

Le polymère selon l'invention peut également être issu d'une polymérisation par addition-fragmentation réversible dans laquelle on a utilisé en outre des monomères multiéthyléniquement insaturés qui ont ensuite subis une étape de réticulation pour obtenir des microgels de première génération ou de générations supérieures, comme cela est décrit par exemple dans le document FR 02 09987 de la Demanderesse, des étoiles comme cela est décrit dans le document WO 98/31739 de DUPONT, des peignes, ou des hyperbranchés.

Les monomères multiéthyléniquement insaturés utiles sont choisis parmi des composés organiques comportant au moins deux insaturations éthyléniques et au plus 10 insaturations et connus comme étant réactifs par voie radicalaire.
De préférence, ces monomères présentent deux ou trois insaturations éthyléniques.
Ainsi, on peut notamment citer les dérivés acryliques, méthacryliques, acrylamido, méthacrylamido, ester vinylique, éther vinylique, diénique, styrénique, alpha-méthyl styrénique et allylique. Ces monomères peuvent aussi renfermer des groupements fonctionnels autres que les insaturations éthyléniques, par exemple des fonctions hydroxyle, carboxyle, ester, amide, amino ou amino substitués, mercapto, silane, epoxy ou halogéno.
Les monomères appartenant à ces familles sont le divinylbenzène et les dérivés du divinylbenzène, le méthacrylate de vinyle, l'anhydride d'acide méthacrylique, le méthacrylate d'allyle, le diméthacrylate d'éthylèneglycol, le phénylène diméthacrylate, le diméthacrylate de diéthylène glycol, le diméthacrylate de triéthylène glycol, le diméthacrylate de tétraéthylène glycol, le diméthacrylate de polyéthylène glycol 200, le diméthacrylate de polyéthylène glycol 400, le 1,3-diméthacrylate de butanediol, le 1,4-diméthacrylate de butanediol, le 1,6-diméthacrylate de hexanediol, le 1,12-diméthacrylate de dodécanediol, le 1,3-diméthacrylate de glycérol, le diméthacrylate de diuréthane, le triméthacrylate de triméthylolpropane. Pour la famille des acrylates multifonctionnels, on peut notamment citer l'acrylate de vinyle, le diacrylate de bisphénol A époxy, le diacrylate de dipropylèneglycol, le diacrylate de tripropylèneglycol, le diacrylate de polyéthylène glycol 600, le diacrylate d'éthylène glycol, le diacrylate de diéthylène glycol, le diacrylate de triéthylène glycol, le diacrylate de tetraéthylène glycol, le diacrylate de néopentyl glycol éthoxylé, le diacrylate de butanediol, le diacrylate d'hexanediol, le diacrylate d'uréthane aliphatique, le triacrylate de triméthylolpropane, le triacrylate de triméthylolpropane éthoxylé, le triacrylate de triméthylolpropane propoxylé, le triacrylate de glycérol propoxylé, le triacrylate d'uréthane aliphatique, le tétraacrylate de triméthylolpropane, le pentaacrylate de dipentaérytritol. Concernant les éthers vinyliques, on peut notamment citer le vinyl crotonate, le diéthylène glycoldivinyléther, l'ether divinylique de butanediol-1,4, le triéthylèneglycol divinyl éther. Pour les dérivés allyliques, on peut notamment citer le diallyl phtalate, le diallyldiméthylammonium chloride, le diallyl malléate, le sodium diallyloxyacetate, le diallylphenylphosphine, le diallylpyrocarbonate, le diallyl succinate, le N,N'-diallyltartardiamide, le N,N-diallyl-2,2,2-trifluoroacétamide, l'ester allylique du diallyloxy acide acétique, le 1,3-diallylurée, la triallylamine, le triallyl trimesate, le triallyl cyanurate, le triallyl trimellitate, le triallyl-1,3,5-triazine-2,4,6(1H, 3H, 5H)-trione. Pour les dérivés acrylamido, on peut notamment citer le N,N'-méthylènebisacrylamide, le N,N'-méthylènebismethacrylamide, le glyoxal bisacrylamide, le diacrylamido acide acétique. En ce qui concerne les dérivés styréniques, on peut notamment citer le divinylbenzène et le 1,3-diisopropénylbenzène. Dans le cas des monomères diéniques, on peut notamment citer le butadiène, le chloroprène et l'isoprène.

Comme monomères multiéthyléniquement insaturés, on préfère le N,N'-méthylènebisacrylamide, le divinylbenzène, le diacrylate d'éthylène glycol, ou le triacrylate de triméthylolpropane.
Ces monomères multiéthyléniquement insaturés peuvent être utilisés seuls ou en mélanges.

La fraction molaire de monomères multiéthyléniquement insaturés par rapport aux monomères monoéthyléniquement insaturés peut être comprise entre 0,001 et 1.

Toutefois il est préférable que l'homme du métier adapte les types et quantités de monomères multiéthyléniquement insaturés utilisés dans la polymérisation pour éviter la présente d'insaturations éthyléniques dans le polymère auquel est appliqué le traitement par l'ozone.
En effet les insaturations éthyléniques risqueraient de réagir avec l'ozone.

Le traitement à l'ozone de l'invention peut être appliqué à toutes les architectures possibles des polymères . On peut citer notamment les diblocs, les triblocs, les étoiles, les microgels, les gradients, les statistiques, les hyperbranchés, ou les peignes.

Les agents thiocarbonylthio réagissent avec l'ozone par une réaction que nous appelons oxydation sans pour autant se restreindre à une chimie particulière ou privilégier un mécanisme donné. En particulier cette réaction peut être plus ou moins poussée en fonction des conditions de mise en contact avec le gaz comprenant de l'ozone et donc conduire à différents sous-produits.

Le procédé de l'invention comprend la mise en contact d'un polymère et d'un gaz.
Ceci peut être mis en oeuvre en utilisant tout type d'appareil classiquement utilisé pour la mise en contact d'un gaz et d'un liquide. On peut citer à titre d'exemple les appareils mentionnés dans le document de C. Moizard, G. Wild, J.C. Charpentier, « Absorption avec réaction chimique », Techniques de l'ingénieur, Traité Génie des procédés, volume1, page 79, 1997. Ces appareils peuvent fonctionner en continu ou semi-continu ou par lots. Il peut s'agir par exemple d'un réacteur agité équipé d'un dispositif de dispersion du gaz en fond de cuve (par exemple un fritté), ou bien d'une colonne gaz/liquide co-courant ou de préférence contre-courant avec ou sans garnissage, ou toute autre méthode usuelle.

Le gaz vecteur de l'ozone peut être de l'air, de l'hélium, de l'oxygène, de l'argon, du dioxyde de carbone, de l'azote ou un mélange de ces gaz. L'air et l'oxygène sont préférés. L'ozone que comprend ce gaz peut être générée en passant de l'air ou de l'oxygène dans une unité de génération d'ozone (ozoniseur), dans laquelle la production d'ozone est due à l'oxydation de l'oxygène sous l'effet d'une étincelle ou couronne électrique, par un procédé bien connu des spécialistes de la génération d'ozone tel que décrit dans le document de C. Nebel, Kirk-Othmer Encyclopedia of Chemical Technology, London, Interscience Publisher, volume 16, pages 683-713, 1981.
On trouve commercialement des ozoniseurs qui produisent de l'ozone à hauteur de typiquement 2% en poids dans l'air et typiquement 8% en poids dans l'oxygène. On peut citer à titre d'exemple le générateur d'ozone BMT 803 commercialisé par la société BMT MESSTECHNIK GMBH.

Le gaz vecteur peut comprendre de environ 0,01% en poids à environ 8% en poids d'ozone rapporté au poids total de gaz. Cette quantité n'est pas critique dans la mesure où même une petite quantité d'ozone réagira avec le thiocarbonylthio. La mise en contact du gaz et du liquide devra être poursuivie plus longtemps si le gaz contient moins d'ozone. Cela peut dans certains cas avoir des inconvénients, par exemple la génération de mousses si le polymère comprend un tensioactif. Dans ce cas, on préfèrera travailler avec un gaz vecteur plus riche en ozone.

Le ratio molaire de l'ozone au thiocarbonylthio est compris entre environ 10000:1 et environ 1:100, et de préférence entre environ 1000:1 et 1:10 et de manière encore plus préférentielle entre environ 100:1 et 1:1.

Les conditions de température et pression pendant la réaction d'ozonolyse peuvent varier et dépendront du mode de mise en contact du gaz et du liquide choisi. Il est possible de travailler à une pression inférieure à 1 bar. L'augmentation de pression dans le réacteur peut favoriser la diffusion de l'ozone dans le liquide et permettre d'accélérer la réaction et on peut donc choisir de travailler à pression supérieure à la pression atmosphérique si l'on souhaite que la réaction se fasse plus rapidement. Il faut pour cela compresser le gaz comprenant l'ozone après génération de l'ozone, et disposer d'un appareillage adapté. On peut travailler entre la pression atmosphérique et 10 bars absolus et de préférence entre la pression atmosphérique et 2 bars absolus.

La température peut aussi être un facteur d'accélération de la réaction en favorisant la diffusion de l'ozone dans le liquide en particulier lorsque ce liquide est une suspension ou dispersion. On peut travailler entre -10°C et 110°C et préférentiellement entre 15°C et 80°C et de manière encore plus préférentielle entre 30°C et 80°C, en tenant compte évidemment du point de fusion et du point d'ébullition du solvant.

Le polymère comprend avant contact avec le gaz comprenant de l'ozone de 0,01% à 35% en poids de thiocarbonylthio. Après contact avec le gaz comprenant de l'ozone, le polymère comprend de environ 80% à 0% en poids de thiocarbonylthio par rapport au poids de thiocarbonylthio initial. En effet dans certains cas on peut ne pas avoir besoin de faire réagir chimiquement tout le thiocarbonylthio initial mais seulement une partie par exemple pour limiter l'odeur ou la couleur qui pourrait être causée par son évolution chimique en dessous d'un seuil acceptable pour le client.

Cette méthode est utilisable avec toute formulation liquide contenant un polymère que ce polymère soit en solution dans un solvant aqueux ou organique, en dispersion dans l'eau ou un solvant ou un mélange de solvants ou en émulsion aqueuse (latex).
Si le polymère est en dispersion, la taille de particule de la dispersion peut être comprise entre 10 et 50000 nanomètres. Si le polymère est en émulsion de particule de la dispersion est comprise entre 10 et 500 nanomètres.

### Méthode d'analyse

On peut vérifier que le thiocarbonylthio a bien réagi avec l'ozone d'une des manières suivantes :
1)- Par GPC (Chromatographie par Perméation de Gel) THF (avec double détection : réfractométrique et UV)

En sortie de colonne GPC, les molécules de polymère sortent par ordre de taille décroissante (c'est à dire souvent de masse décroissante) ; elles passent ensuite devant un premier détecteur, réfractométrique (RI). L'aire du pic correspondant est proportionnelle à la quantité de polymère (de cette taille) injectée dans la colonne. Puis les molécules passent devant un détecteur UV (longueur d'onde donnée) ; l'aire du pic correspondant est proportionnelle à la quantité de polymère de cette taille, absorbant à la longueur d'onde fixée.

En pratique on règle le détecteur UV à une longueur d'onde où la fonction thiocarbonyl thio absorbe sélectivement par rapport au squelette de la chaîne polymère. Ainsi à la longeur d'onde choisie, seule l'extrémité thiocarbonylthio absorbe en UV et non pas la chaîne polymère.
Par exemple on règle le détecteur UV à une longueur d'onde de 290 nm dans le cas des composés thiocarbonylthio décrits dans les exemples de cette invention.

Sur le chromatogramme issu d'une détection réfractométrique (détection massique), un pic sort au temps de rétention correspondant au polymère. Sur le chromatogramme du détecteur UV, il y a aussi un pic à ce temps de rétention et son aire est proportionnelle à la quantité molaire de polymère portant une ou plusieurs fonctions thiocarbonyl thio. Cette dernière dépendant de la quantité de polymère injecté, il faut faire une correction si l'on souhaite comparer le chromatogramme à celui d'un échantillon de référence (l'aire détectée en UV doit être multipliée par le ratio de l'aire RI de la référence par l'aire RI de l'échantillon à comparer).
2) quand le polymère comprend avant contact avec le gaz comprenant de l'ozone une quantité de thiocarbonylthio qui est trop faible pour être détectée par la méthode décrite au point 1 ci-dessus, on peut vérifier que n'apparaissent pas à l'usage de coloration ou d'odeur ou de modification des propriétés du polymère qui soient dues à l'évolution chimique du thiocarbonylthio.

L'utilisation de l'ozone présente les avantages suivants :
Il peut-être utilisé quelle que soit la forme sous laquelle se présente le polymère, que le polymère soit en solution, dispersion ou en émulsion.

Il peut être utilisé pour une très vaste gamme de natures chimiques de polymères. La seule contrainte est que le polymère ne comprenne pas de fonctions, autre que les agents thiocarbonylthio, susceptibles de réagir avec l'ozone.
L'intérêt d'utiliser de l'ozone est que l'oxydation du thiocarbonylthio peut avoir lieu sans pour autant générer de sous produits difficiles à éliminer du milieu réactionnel.

L'invention a également pour objet un polymère obtenu par le procédé tel que décrit ci-dessus.
L'invention a également pour objet l'utilisation de ce polymère dans les applications dans lesquelles on utilise des polymères.
D'autres aspects et avantages des procédés ou des produits objets de l'invention apparaîtront à la lumière des exemples qui sont présentés ci-dessous à titre illustratif et nullement limitatif.

### Exemple 1. Traitement par l'ozone d'une solution de polyacrylate de butyle synthétisé en présence de O-ethyl-S-(1-methoxycarbonyl)ethyl)xanthate

### 1 ^{ère} étape : Synthèse de polyacrylate de butyle en présence de O-ethyl-S-(1-methoxycarbonyl)ethyl)xanthate

Dans un réacteur verre de 0,5 L muni d'une double enveloppe et d'une ancre d'agitation, sont introduits 164 g d'éthanol et 23,81 g de *O*-ethyl-*S*-(1-methoxycarbonyl)ethyl)xanthate (CH₃CHCO₂CH₃)S(C=S)OEt. Le réacteur est inerté à l'argon pendant 15 minutes, puis la température est augmentée jusqu'à 70°C. 2,81 g d'azobisisobutyronitrile (AIBN) sont alors ajoutés en une fois, en même temps qu'est démarrée l'introduction de 80 g d'acrylate de butyle. L'introduction de la totalité du monomère est maintenue en continu pendant une heure. A ce moment, 2,81g d'AIBN sont ajoutés. Le milieu réactionnel est maintenu à cette température pendant deux heures supplémentaires, avant d'être refroidi à température ambiante.

Un échantillon est prélevé et analyse par chromatographie d'exclusion stérique (C.E.S). La masse molaire moyenne en nombre (Mn) est mesurée par élution du polymère dans le THF, avec un étalonnage par du polystyrène. Mn= 900 g/mole. L'analyse de l'échantillon par chromatographie en phase gazeuse (C.P.G) permet de conclure que la fraction de monomère polymérisé est de 75%.

Le milieu réactionnel est ensuite séché par évaporation sous vide du solvant et du monomère non converti.

### 2^{ème} étape : Traitement par l'ozone du polymère issu de la première étape

123, 9 g de polyacrylate de butyle issu de l'étape 1 sont dissous dans l'éthanol de telle sorte que la solution contienne 17,8% en poids de polymère. La température de la solution est maintenue à 38°C. Un courant d'ozone est mis à buller dans le solution de polymère, avec un débit d'ozone de 4 à 5 grammes par heure.
En utilisant la méthode d'analyse basée sur le suivi de la décroissance de l'aire sous le chromatogramme GPC, en détection UV à 290 nm, en fonction du temps, il a été constaté que 97% de l'extrêmité thiocarbonylthio du polymère est modifiée chimiquement au bout d'1h30 de bullage, et plus de 99% en 2 heures.

Ce résultat est conforté par une analyse RMN du polymère avant et après traitement à l'ozone. En effet, l'ozone engendre le disparition du pic caractéristique de la double liaison C=S de l'extrêmité thiocarbonylthio situé à 210 ppm (RMN ¹³C).

## Revendications

1. Procédé pour oxyder partiellement ou totalement une ou plusieurs extrêmités thiocarbonylthio d'un polymère issu d'une polymérisation radicalaire contrôlée par addition-fragmentation réversible à l'aide d'agents thiocarbonylthio, comprenant une étape de mise en contact dudit polymère avec un gaz comprenant de l'ozone au cours de laquelle l'ozone réagit avec la ou les extrêmités thiocarbonylthio.

2. Procédé selon la revendication 1, **caractérisé en ce que** le gaz comprenant de l'ozone est de l'air, de l'hélium, de l'oxygène, de l'argon, du dioxyde de carbone, de l'azote ou un mélange de ces gaz

3. Procédé selon l'une quelconque des revendications 1 ou 2, **caractérisé en ce que** le gaz comprenant de l'ozone contient d'environ 0,01% en poids à environ 8% en poids d'ozone rapporté au poids total de gaz.

4. Procédé selon l'une quelconque des revendications 1 à 3, **caractérisé en ce que** le ratio molaire de l'ozone au thiocarbonylthio est compris entre environ 10000:1 et environ 1:100.

5. Procédé selon la revendication 4, **caractérisé en ce que** le ratio molaire de l'ozone au thiocarbonylthio est compris entre environ 1000:1 et environ 1:10.

6. Procédé selon l'une quelconque des revendications 4 ou 5, **caractérisé en ce que** le ratio molaire de l'ozone au thiocarbonylthio est compris entre environ 100:1 et environ 1:1.

7. Procédé selon l'une quelconque des revendications 1 à 6, **caractérisé en ce que** le composé thiocarbonylthio est un composé qui peut être de formule (A), (B), ou (C) suivantes : 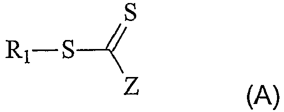 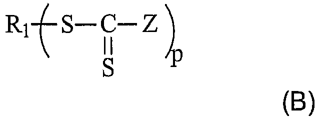 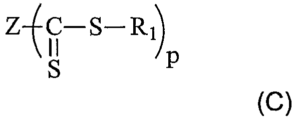 dans lesquelles :
- Z représente :
• un atome d'hydrogène,
• un atome de Chlore,
• un radical alkyl éventuellement substitué, aryl éventuellement substitué,
• un hétérocycle éventuellement substitué,
• un radical alkylthio éventuellement substitué,
• un radical arylthio éventuellement substitué,
• un radical alkoxy éventuellement substitué,
• un radical aryloxy éventuellement substitué,
• un radical amino éventuellement substitué,
• un radical hydrazine éventuellement substitué,
• un radical alkoxycarbonyl éventuellement substitué,
• un radical aryloxycarbonyl éventuellement substitué,
• un radical carboxy, acyloxy éventuellement substitué,
• un radical aroyloxy éventuellement substitué,
• un radical carbamoyle éventuellement substitué,
• un radical cyano,
• un radical dialkyl- ou diaryl-phosphonato,
• un radical dialkyl-phosphinato ou diaryl-phosphinato, ou
• une chaîne polymère,
- R₁ représente :
• un groupe alkyle, acyle, aryle, aralkyle, alcène ou alcyne éventuellement substitué,
• un cycle carboné ou un hétérocycle, saturé ou non, aromatique éventuellement substitué, ou
• une chaîne polymère, et
- p représente un nombre compris entre 2 et 10.

8. Procédé selon la revendication 7, **caractérisé en ce que** les composés thiocarbonylthio sont des composés xanthates, dithiocarbamates, dithioesters, dithiocarbazates ou trithiocarbonates.

9. Procédé selon la revendication 8, **caractérisé en ce que** les composés sont des xanthates.

10. Procédé selon l'une quelconque des revendications 1 à 9, **caractérisé en ce que** le polymère comprend d'environ 0,01% à environ 35% en poids de thiocarbonylthio avant contact avec le gaz comprenant de l'ozone.

11. Procédé selon l'une quelconque des revendications 1 à 10, **caractérisé en ce que** le polymère comprend d'environ 80% à 0% en poids de thiocarbonylthio par rapport au poids de thiocarbonylthio initial après contact avec le gaz comprenant de l'ozone.

12. Procédé selon l'une quelconque des revendications 1 à 11, **caractérisé en ce que** le polymère est un homopolymère ou un copolymère de monomère(s) éthyléniquement insaturé(s).

13. Procédé selon la revendication 12, **caractérisé en ce que** les monomères éthyléniquement insaturés sont des monomères monoéthyléniquements insaturés choisis parmis :
- le styrène et les dérivés du styrène comme l'alphaméthylstyrène ou le vinyltoluène
- les esters vinyliques d'acide carboxylique comme l'acétate de vinyle, le Versatate® de vinyle, le propionate de vinyle,
- les halogénures de vinyle et de vinylidène,
- les acides mono- et di- carboxyliques insaturés éthyléniques comme l'acide acrylique, l'acide méthacrylique, l'acide itaconique, l'acide maléique, l'acide fumarique et les mono-alkylesters des acides dicarboxyliques du type cité avec les alcanols ayant de préférence 1 à 4 atomes de carbone et leurs dérivés N-substitués,
- les amides des acides carboxyliques insaturés comme l'acrylamide, le méthacrylamide, le N-méthylolacrylamide ou méthacrylamide, les N-alkylacrylamides.
- les monomères éthyléniques comportant un groupe acide sulfonique et ses sels alcalins ou d'ammonium par exemple l'acide vinylsulfonique, l'acide vinylbenzène sulfonique, l'acide alpha-acrylamido méthylpropane-sulfonique, le 2-sulfoéthylène-méthacrylate,
les amides de la vinylamine, notamment le vinylformamide, le vinylacétamide, la N-vinylpyrrolidone et la N-vinylcaprolactame,
les monomères éthyléniques insaturés comportant un groupe amino secondaire, tertiaire ou quaternaire, ou un groupe hétérocyclique contenant de l'azote tel que par exemple les vinylpyridines, le vinylimidazole, les (méth)acrylates d'aminoalkyle et les (méth)acrylamides d'aminoalkyle comme le diméthylaminoéthyl-acrylate ou -méthacrylate, le ditertiobutylaminoéthyl-acrylate ou -méthacrylate, le diméthylamino méthyl-acrylamide ou -méthacrylamide, ou des monomères zwitterioniques comme par exemple l'acrylate de sulfopropyl (diméthyl)aminopropyle,
- les esters (méth)acryliques, tels que l'acrylate de glycidyle ou le méthacrylate de glycidyle,
- les nitriles vinyliques,
- les monomères comprenant au moins une fonction boronate ou un précurseur choisis, par exemple, parmi l'acide acryloylbenzène boronique, l'acide méthacryloylbenzène boronique, l'acide vinyl-4 benzène boronique, l'acide 3-acrylamido phényl boronique, l'acide 3-méthacrylamido phényl boronique, seuls ou en mélanges, ou sous forme de sels,
- les monomères comprenant des phosphonates, choisis par exemple parmi les dérivés N-methacrylamidomethylphosphonic acid esters, en particulier l'ester n-propylique (RN 31857-11-1), l'ester méthylique (RN 31857-12-2), l'ester éthylique (RN 31857-13-3), l'ester n-butylique (RN 31857-14-4), l'ester isopropylique (RN 51239-00-0), ainsi que leurs dérivés monoacide et diacide phosphonique, tel le N-methacrylamidomethylphosphonic diacid (RN 109421-20-7) ; les dérivés N-methacrylamidoethylphosphonic acid esters, tel le N-methacrylamidoethyl phosphonic acid dimethyl ester (RN 266356-40-5), le N-methacrylamidoethyl phosphonic acid di(2-butyl-3,3-dimethyl) ester (RN 266356-45-0), ainsi que leurs dérivés monoacide et diacide phosphonique, tel le N-methacrylamidoethylphosphonic diacid (RN 80730-17-2) ; les dérivés N-acrylamidomethylphosphonic acid esters tels le N-acrylamidomethyl phosphonic acid dimethyl ester (RN 24610-95-5), le N-acrylamidomethyl phosphonic acid diethyl ester (RN 24610-96-6), le bis(2-chloropropyl) N-acrylamidomethyl phosphonate (RN 50283-36-8), ainsi que leurs dérivés monoacide et diacide phosphonique tel le N-acrylamidomethyl phosphonic acid (RN 151752-38-4) ; les dérivés vinylbenzylphosphonate dialkyl ester, en particulier les dérivés di(n-propyl) (RN 60181-26-2), di(isopropyl) (RN 159358-34-6), diethyl (RN 726-61-4), dimethyl (RN 266356-24-5), di(2-butyl-3,3-dimethyl) (RN 266356-29-0) et di (t-butyl) ester (RN 159358-33-5), ainsi que leurs variantes monoacide et diacide phosphonique, tel le vinylbenzylphosphonic diacid (RN 53459-43-1); le diéthyl 2-(4-vinylphenyl)ethanephosphonate (RN 61737-88-0) ; les dérivés dialkylphosphonoalkyl acrylates et méthacrylates, tel le 2-(acryloyloxy)ethylphosphonic acid dimethyl ester (RN 54731-78-1) et le 2-(methacryloyloxy)ethylphosphonic acid dimethyl ester (RN 22432-83-3), le 2-(methacryloyloxy)methylphosphonic acid diethyl ester (RN 60161-88-8), le 2-(methacryloyloxy)methylphosphonic acid dimethyl ester (RN 63411-25-6), le 2-(methacryloyloxy)propylphosphonic acid dimethyl ester (RN 252210-28-9), le 2-(acryloyloxy)methylphosphonic acid diisopropyl ester (RN 51238-98-3), le 2-(acryloyloxy) ethylphosphonic acid diethyl ester (RN 20903-86-0), ainsi que leurs variantes monoacide et diacide phosphonique, tel le 2-(methacryloyloxy)ethylphosphonic acid (RN 80730-17-2), le 2-(methacryloyloxy)methylphosphonic acid (RN 87243-97-8), le 2-(methacryloyloxy)propylphosphonic acid (RN 252210-30-3), le 2-(acryloyloxy)propylphosphonic acid (RN 254103-47-4) et le 2-(acryloyloxy)ethylphosphonic acid ; l'acide vinyl phosphonique, éventuellement substitué par des groupements cyano, phényle, ester ou acétate, l'acide vinylidene phosphonique, sous forme de sel de sodium ou son ester isopropylique, le vinylphosphonate de bis(2-chloroéthyle), ces monomères à fonction mono ou diacide phosphonique pouvant être utilisés sous forme neutralisée, partiellement ou totalement, éventuellement par une amine, par exemple la dicyclohexylamine,
- les monomères choisis parmi les analogues phosphates des monomères phosphonatés décrits ci-dessus, les monomères comportant alors un enchaînement -C-O-P- comparativement à l'enchaînement -C-P- des phosphonates, et
- les monomères porteurs d'un groupe alcoxysilane choisi parmi le méthacrylate de triméthoxysilylpropyle, le méthacrylate de triéthoxysilylpropyle, le méthacrylate de tributoxysilylpropyle, le méthacrylate de diméthoxyméthylsilylpropyle, le méthacrylate de diéthoxyméthylsilylpropyle, le méthacrylate de dibutoxyméthylsilylpropyle, le méthacrylate de diisopropoxyméthylsilylpropyle, le méthacrylate de diméthoxysilylpropyle, le méthacrylate de diéthoxysilylpropyle, le méthacrylate de dibutoxysilylpropyle, le méthacrylate de diisopropoxysilylpropyle, le méthacrylate de triméthoxysilylpropyle, le méthacrylate de triéthoxysilylpropyle, le méthacrylate de tributoxysilylpropyle, l'acrylate de triméthoxysilylpropyle, l'acrylate de triéthoxysilylpropyle, l'acrylate de tributoxysilylpropyle, l'acrylate de diméthoxyméthylsilylpropyle, l'acrylate de diéthoxyméthylsilylpropyle, l'acrylate de dibutoxyméthylsilylpropyle, l'acrylate de diisopropoxyméthylsilylpropyle, l'acrylate de diméthoxysilylpropyle, l'acrylate de diéthoxysilylpropyle, l'acrylate de dibutoxysilylpropyle, l'acrylate de diisopropoxysilylpropyle, l'acrylate de triméthoxysilylpropyle, l'acrylate de triéthoxysilylpropyle, ou l'acrylate de tributoxysilylpropyle ou leur mélange.

14. Procédé selon l'une quelconque des revendications 12 ou 13, **caractérisée en ce que** les monomères éthyléniquement insaturés sont choisis parmi les monomères styréniques, les esters vinyliques, les acrylates hydrophiles neutres ou chargés, les acrylates hydrophobes, les méthacrylates hydrophiles neutres ou chargés, les méthacrylates hydrophobes, les acrylamido hydrophiles, hydrophobes, neutres ou chargés, les méthacrylamido hydrophiles, hydrophobes, neutres ou chargés ou leurs mélanges.

15. Procédé selon la revendication 12, **caractérisé en ce que** une fraction des monomères éthyléniquement insaturés sont choisis parmi des monomères multiéthyléniquement insaturés.

16. Procédé selon la revendication 15, **caractérisé en ce que** le monomère multiéthyléniquement insaturé comprend au moins deux insaturations éthyléniques et au plus 10 insaturations.

17. Procédé selon la revendication 16, **caractérisé en ce que** le monomère multiéthyléniquement insaturé comprend deux ou trois insaturations éthyléniques.

18. Procédé selon l'une quelconque des revendications 15 à 17, **caractérisé en ce que** le monomère multiéthyléniquement insaturé est choisi parmi les dérivés acryliques, méthacryliques, acrylamido, méthacrylamido, ester vinylique, éther vinylique, diénique, styrénique, alpha-méthyl styrénique et allylique.

19. Procédé selon l'une quelconque des revendications 15 à 18, **caractérisé en ce que** le monomère multiéthyléniquement insaturé comprend en outre un ou plusieurs groupements fonctionnels autres que les insaturations éthyléniques choisis parmi les fonctions hydroxyle, carboxyle, ester, amide, amino ou amino substitués, mercapto, silane, epoxy ou halogéno.

20. Procédé selon l'une quelconque des revendications 15 à 19, **caractérisé en ce que** le monomère multiéthyléniquement insaturé est choisi parmi le divinylbenzène et les dérivés du divinylbenzène, le méthacrylate de vinyle, l'anhydride d'acide méthacrylique, le méthacrylate d'allyle, le diméthacrylate d'éthylèneglycol, le phénylène diméthacrylate, le diméthacrylate de diéthylène glycol, le diméthacrylate de triéthylène glycol, le diméthacrylate de tétraéthylène glycol, le diméthacrylate de polyéthylène glycol 200, le diméthacrylate de polyéthylène glycol 400, le 1,3-diméthacrylate de butanediol, le 1,4-diméthacrylate de butanediol, le 1,6-diméthacrylate de hexanediol, le 1,12-diméthacrylate de dodécanediol, le 1,3-diméthacrylate de glycérol, le diméthacrylate de diuréthane, le triméthacrylate de triméthylolpropane ; l'acrylate de vinyle, le diacrylate de bisphénol A époxy, le diacrylate de dipropylèneglycol, le diacrylate de tripropylèneglycol, le diacrylate de polyéthylène glycol 600, le diacrylate d'éthylène glycol, le diacrylate de diéthylène glycol, le diacrylate de triéthylène glycol, le diacrylate de tetraéthylène glycol, le diacrylate de néopentyl glycol éthoxylé, le diacrylate de butanediol, le diacrylate d'hexanediol, le diacrylate d'uréthane aliphatique, le triacrylate de triméthylolpropane, le triacrylate de triméthylolpropane éthoxylé, le triacrylate de triméthylolpropane propoxylé, le triacrylate de glycérol propoxylé, le triacrylate d'uréthane aliphatique, le tétraacrylate de triméthylolpropane, le pentaacrylate de dipentaérytritol ;le vinyl crotonate, le diéthylène glycoldivinyléther, l'ether divinylique de butanediol-1,4, le triéthylèneglycol divinyl éther ; le diallyl phtalate, le diallyldiméthylammonium chloride, le diallyl malléate, le sodium diallyloxyacetate, le diallylphenylphosphine, le diallylpyrocarbonate, le diallyl succinate, le N,N'-diallyltartardiamide, le N,N-diallyl-2,2,2-trifluoroacétamide, l'ester allylique du diallyloxy acide acétique, le 1,3-diallylurée, la triallylamine, le triallyl trimesate, le triallyl cyanurate, le triallyl trimellitate, le triallyl-1,3,5-triazine-2,4,6(1H, 3H, 5H)-trione ; le N,N'-méthylènebisacrylamide, le N,N'-méthylènebismethacrylamide, le glyoxal bisacrylamide, le diacrylamido acide acétique ; le divinylbenzène et le 1,3-diisopropénylbenzène ; le butadiène, le chloroprène ou l'isoprène.

21. Procédé selon l'une quelconque des revendications 15 à 20, **caractérisé en ce que** le monomère multiéthyléniquement insaturé est choisi parmi le N,N'-méthylènebisacrylamide, le divinylbenzène, le diacrylate d'éthylène glycol, ou le triacrylate de triméthylolpropane.

22. Procédé selon l'une quelconque des revendications 1 à 8, **caractérisé en ce que** la fraction molaire de monomères multiéthyléniquement insaturés par rapport aux monomères monoéthyléniquement insaturés est comprise entre 0,001 et 1.

23. Procédé selon l'une quelconque des revendications 1 à 22, **caractérisé en ce que** le polymère est en solution dans un solvant aqueux ou organique.

24. Procédé selon l'une quelconque des revendications 1 à 22, **caractérisé en ce que** le polymère est en dispersion dans l'eau ou un solvant ou un mélange de solvants.

25. Procédé selon l'une quelconque des revendications 1 à 22, **caractérisé en ce que** le polymère est en émulsion aqueuse (latex).

26. Procédé selon la revendication 24, **caractérisé en ce que** la taille de particule de la dispersion est comprise entre environ 10 et environ 50000 nanomètres.

27. Procédé selone la revendication 25, **caractérisé en ce que** la taille de particule de l'émulsion aqueuse est comprise entre environ 10 et environ 500 nanomètres.

28. Procédé selon l'une quelconque des revendications 1 à 27, **caractérisé en ce que** le polymère est mis en contact avec l'ozone à contre courant.

29. Polymère obtenu par le procédé suivant l'une quelconque des revendications 1 à 28.

## Patentansprüche

1. Verfahren zum teilweisen oder vollständigen Oxidieren eines oder mehrerer Thiocarbonylthio-Enden eines Polymers, das aus einer radikalischen Polymerisation hervorgeht, welche durch reversible Addition-Fragmentierung mit Hilfe von Thiocarbonylthio-Mitteln gesteuert wird, wobei es einen Schritt des Inkontaktbringens des Polymers mit einem ozonumfassenden Gas umfasst, im Laufe dessen das Ozon mit dem oder den Thiocarbonylthio-Enden reagiert.

2. Verfahren nach Anspruch 1, **dadurch gekennzeichnet, dass** es sich bei dem ozonumfassenden Gas um Luft, Helium, Sauerstoff, Argon, Kohlendioxid, Stickstoff oder um eine Mischung dieser Gase handelt.

3. Verfahren nach einem beliebigen der Ansprüche 1 oder 2, **dadurch gekennzeichnet, dass** das ozonumfassende Gas ungefähr 0,01 Gewichts-% bis ungefähr 8 Gewichts-% an Ozon enthält, bezogen auf den Gesamtgasgewicht.

4. Verfahren nach einem beliebigen der Ansprüche 1 bis 3, **dadurch gekennzeichnet, dass** das Molverhältnis des Ozons zum Thiocarbonylthio im Bereich von ungefähr 10000:1 bis ungefähr 1:100 liegt.

5. Verfahren nach Anspruch 4, **dadurch gekennzeichnet, dass** das Molverhältnis des Ozons zum Thiocarbonylthio im Bereich von ungefähr 1000:1 bis ungefähr 1:10 liegt.

6. Verfahren nach einem beliebigen der Ansprüche 4 oder 5, **dadurch gekennzeichnet, dass** das Molverhältnis des Ozons zum Thiocarbonylthio im Bereich von ungefähr 100:1 bis ungefähr 1:1 liegt.

7. Verfahren nach einem beliebigen der Ansprüche 1 bis 6, **dadurch gekennzeichnet, dass** es sich bei der Thiocarbonylthio-Verbindung um eine Verbindung handelt, die den folgenden Formeln (A), (B) oder (C) entsprechen kann: 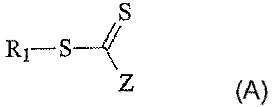 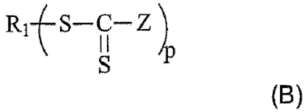 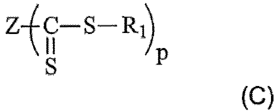 wobei:
- Z für Folgendes steht:
• ein Wasserstoffatom,
• ein Chloratom,
• einen möglicherweise substituierten Alkyl-, möglicherweise substituierten Arylrest,
• eine möglicherweise substituierte heterozyklische Gruppe,
• einen möglicherweise substituierten Alkylthiorest,
• einen möglicherweise substituierten Arylthiorest,
• einen möglicherweise substituierten Alkoxyrest,
• einen möglicherweise substituierten Aryloxyrest,
• einen möglicherweise substituierten Aminorest,
• einen möglicherweise substituierten Hydrazinrest,
• einen möglicherweise substituierten Alkoxycarbonylrest,
• einen möglicherweise substituierten Aryloxycarbonylrest,
• einen möglicherweise substituierten Carboxy-, Acyloxyrest,
• einen möglicherweise substituierten Aroyloxyrest,
• einen möglicherweise substituierten Carbamoylrest,
• einen Cyanorest,
• einen Dialkyl- oder Diarylphosphonatorest,
• einen Dialkylphosphinato- oder Diarylphosphinatorest, oder
• eine Polymerkette,
- R₁ für folgendes steht:
• eine möglicherweise substituierte Alkyl-, Acyl-, Aryl-, Aralkyl-, Alken- oder Alkingruppe,
• eine aromatische, möglicherweise substituierte, carbozyklische oder heterozyklische Gruppe, die gesättigt sein kann oder nicht, oder
• eine Polymerkette, und
- P für eine Zahl im Bereich von 2 bis 10 steht.

8. Verfahren nach Anspruch 7, **dadurch gekennzeichnet, dass** es sich bei den Thiocarbonylthio-Verbindungen um Xanthat-, Dithiocarbamat-, Dithioester-, Dithiocarbazat- oder Trithiocarbonat-Verbindungen handelt.

9. Verbindung gemäß Anspruch 8, **dadurch gekennzeichnet, dass** es sich bei den Verbindungen um Xanthate handelt.

10. Verfahren nach einem beliebigen der Ansprüche 1 bis 9, **dadurch gekennzeichnet, dass** das Polymer ungefähr 0,01 % bis ungefähr 35 % nach Gewicht an Thiocarbolylthio umfasst, bevor es mit dem ozonumfassenden Gas in Kontakt kommt.

11. Verfahren nach einem beliebigen der Ansprüche 1 bis 10, **dadurch gekennzeichnet, dass** das Polymer ungefähr 80 % bis ungefähr 0 % nach Gewicht an Thiocarbonylthio umfasst, bezogen auf anfängliche Gewicht an Thiocarbonylthio, nachdem es mit dem ozonumfassenden Gas in Kontakt gekommen ist.

12. Verfahren nach einem beliebigen der Ansprüche 1 bis 11, **dadurch gekennzeichnet, dass** es sich bei dem Polymer um ein Homopolymer oder ein Copolymer aus (einem) ethylenisch ungesättigtem/ungesättigten Monomer(en) handelt.

13. Verfahren nach Anspruch 12, **dadurch gekennzeichnet, dass** es sich bei den ethylenisch ungesättigten Monomeren um einfach ethylenisch ungesättigte Monomere handelt, die aus den folgenden ausgewählt sind:
- Styrol und Derivaten des Styrols wie alpha-Methylstyrol oder Vinyltoluol
- Carbonsäurevinylestern wie Vinylacetat, Vinylversatat®, Vinylpropionat,
- Vinyl- und Vinylidenhalogeniden,
- ethylenisch ungesättigten Mono- und Dicarbonsäuren wie Acrylsäure, Methacrylsäure, Itaconsäure, Maleinsäure, Fumarsäure sowie Monoalkylestern von Dicarbonsäuren der genannten Art mit Alkanolen, die vorzugsweise 1 bis 4 Kohlenstoffatome haben, sowie deren N-substituierte Derivaten,
- Amiden ungesättigter Carbonsäuren wie Acrylamid, Methacrylamid, N-Methylolacrylamid oder Methacrylamid, N-Alkylacrylamiden.
- ethylenischen Monomeren, die eine Sulfonsäuregruppe aufweisen, sowie deren Alkali- und Ammoniumsalzen, wie beispielsweise Vinylsulfonsäure, Vinylbenzolsulfonsäure, alpha-Acrylamidomethylpropansulfonsäure, 2-Sulfoethylenmethacrylat,
Amiden von Vinylamin, insbesondere Vinylformamid, Vinylacetamid, N-Vinylpyrrolidon und N-Vinylcaprolactam,
ethylenisch ungesättigten Monomeren, die eine sekundäre, tertiäre oder quartäre Aminogruppe oder eine stickstoffhaltige heterozyklische Gruppe aufweisen, wie beispielsweise Vinylpyridinen, Vinylimidazol, Aminoalkyl(meth)acrylaten und Aminoalkyl(meth)acrylamiden wie Dimethylaminoethylacrylat oder -methacrylat, di-tert.-Butylaminoethylacrylat oder -methacrylat, Dimethylaminomethylacrylamid oder -methacrylamid, oder zwitterionischen Monomeren wie beispielsweise Sulfopropyl(dimethyl)aminopropylacrylat,
- (Meth)acrylsäureestern, wie etwa Glycidylacrylat oder Glycidylmethacrylat,
- Vinylnitrile,
- Monomeren, die mindestens eine funktionelle Boronatgruppe oder eine Vorstufe umfassen, wobei sie beispielsweise aus Acryloylbenzolboronsäure, Methacryloylbenzolboronsäure, Vinyl-4-benzolboronsäure, 3-Acrylamidophenylboronsäure, 3-Methacrylamidophenylboronsäure ausgewählt sind, welche allein oder in Mischungen, oder in Form von Salzen vorliegen,
- Monomeren, die Phosphonate umfassen, wobei sie beispielsweise aus den Derivaten von N-Methacrylamidomethylphosphonsäure ausgewählt sind, insbesondere aus dem n-Propylester (RN 31857-11-1), dem Methylester (RN 31857-12-2), dem Ethylester (RN 31857-13-3), dem n-Butylester (RN 31857-14-4), dem Isopropylester (RN 51239-00-0), sowie deren Mono- und Diphosponsäurederivaten, wie etwa N-Methacrylamidomethyldiphosphonsäure (RN 109421-20-7); aus den Derivaten von N-Methacrylamidoethylphosphonsäureestern, wie etwa aus N-Methacrylamidoethylphosphonsäuredimethylester (RN 266356-40-5), N-Methacrylamidoethylphosphonsäure-di(2-butyl-3,3-dimethyl)ester (RN 266356-45-0), sowie deren Mono- und Diphosponsäurederivaten, wie etwa N-Methacrylamidoethyldiphosphonsäure (RN 80730-17-2); aus den Derivaten von N-Acrylamidomethylphosphonsäureestern wie etwa aus N-Acrylamidomethylphosphonsäuredimethylester (RN 24610-95-5), N-Acrylamidomethylphosphonsäurediethylester (RN 24610-96-6), bis-(2-Chlorpropyl)-N-acrylamidomethylphosphonat (RN 50283-36-8), sowie deren Mono- und Diphosponsäurederivaten wie etwa N-Acrylamidomethylphosphonsäure (RN 151752-38-4); aus den Derivaten von Vinylbenzylphosphonatdialkylester, insbesondere den Di(n-propyl)- (RN 60181-26-2), Di(isopropyl) (RN 159358-34-6), Diethyl- (RN 726-61-4), Dimethyl- (RN 266356-24-5), Di(2-butyl-3,3-dimethyl)- (RN 266356-29-0) und Di-(t-butyl)- (RN 159358-33-5) esterderivaten, sowie deren Mono- und Diphosphonsäurevarianten, wie etwa Vinylbenzyldiphosphonsäure (RN 53459-43-1); Diethyl-2-(4-vinylphenyl)ethanphosphonat (RN 61737-88-0); aus den Derivaten von Dialkylphosphonoalkylacrylaten und -methacrylaten, wie etwa aus 2-(Acryloyloxy)ethylphosphonsäuredimethylester (RN 54731-78-1) und 2-(Methacryloyloxy)ethylphosphonsäuredimethylester (RN 22432-83-3), 2-(Methacryloyloxy)methylphosphonsäurediethylester (RN 60161-88-8), 2-(Methacryloyloxy)methylphosphonsäuredimethylester (RN 63411-25-6), 2-(Methacryloyloxy)propylphosphonsäuredimethylester (RN 252210-28-9), 2-(Acryloyloxy)methylphosphonsäurediisopropylester (RN 51238-98-3), 2-(Acryloyloxy)ethylphosphonsäurediethylester (RN 20903-86-0), sowie deren Mono- und Diphosphonsäurevarianten, wie etwa aus 2-(Methacryloyloxy)ethylphosphonsäure (RN 80730-17-2), 2-(Methacryloyloxy)methylphosphonsäure (RN 87243-97-8), 2-(Methacryloyloxy)propylphosphonsäure (RN 252210-30-3), 2-(Acryloyloxy)propylphosphonsäure (RN 254103-47-4) und 2-(Acryloyloxy)ethylphosphonsäure; aus Vinylphosphonsäure, wobei diese möglicherweise mit Cyano-, Phenyl-, Ester- oder Acetatgruppen substituiert ist, Vinylidenphosphonsäure, in Form von Natriumsalz oder ihres Isopropylesters, bis-(2-Chlorethyl)vinylphosphonat, wobei diese Monomere mit funktioneller Mono- oder Diphosphonsäuregruppe in einer Form verwendet werden können, die teilweise oder vollständig neutralisiert ist, möglicherweise durch ein Amin, beispielsweise Dicyclohexylamin,
- Monomeren, die aus den Phosphat-Analoga der oben beschriebenen Phosphonat-Monomere ausgewählt sind, wobei die Monomere in diesem Falle eine -C-O-P-Kette aufweisen, verglichen mit der -C-P-Kette der Phosphonate, und
- Monomeren, die mit einer Alkoxysilangruppe versehen sind, wobei sie aus Trimethoxysilylpropylmethacrylat, Triethoxysilylpropylmethacrylat, Tributoxysilylpropylmethacrylat, Dimethoxymethylsilylpropylmethacrylat, Diethoxymethylsilylpropylmethacrylat, Dibutoxymethylsilylpropylmethacrylat, Diisopropoxymethylsilylpropylmethacrylat, Dimethoxysilylpropylmethacrylat, Diethoxysilylpropylmethacrylat, Dibutoxysilylpropylmethacrylat, Diisopropoxysilylpropylmethacrylat, Trimethoxysilylpropylmethacrylat, Triethoxysilylpropylmethacrylat, Tributoxysilylpropylmethacrylat, Trimethoxysilylpropylacrylat, Triethoxysilylpropylacrylat, Tributoxysilylpropylacrylat, Dimethoxymethylsilylpropylacrylat, Diethoxymethylsilylpropylacrylat, Dibutoxymethylsilylpropylacrylat, Diisopropoxymethylsilylpropylacrylat, Dimethoxysilylpropylacrylat, Diethoxysilylpropylacrylat, Dibutoxysilylpropylacrylat, Diisopropoxysilylpropylacrylat, Trimethoxysilylpropylacrylat, Triethoxysilylpropylacrylat, Tributoxysilylpropylacrylat oder deren Mischung ausgewählt sind.

14. Verfahren nach einem beliebigen der Ansprüche 12 oder 13, **dadurch gekennzeichnet, dass** die ethylenisch ungesättigten Monomere aus den Styrolmonomeren, den Vinylestern, den neutralen oder geladenen hydrophilen Acrylaten, den hydrophoben Acrylaten, den neutralen oder geladenen hydrophilen Methacrylaten, den hydrophoben Methacrylaten, den hydrophilen, hydrophoben, neutralen oder geladenen Acrylamidoverbindungen, den hydrophilen, hydrophoben, neutralen oder geladenen Methacrylamidoverbindungen oder deren Mischungen ausgewählt sind.

15. Verfahren nach Anspruch 12, **dadurch gekennzeichnet, dass** eine Fraktion der ethylenisch ungesättigten Monomere aus den mehrfach ethylenisch ungesättigten Monomeren ausgewählt ist.

16. Verfahren nach Anspruch 15, **dadurch gekennzeichnet, dass** das mehrfach ethylenisch ungesättigte Monomer mindestens zwei ethylenisch ungesättigte Stellen und höchstens 10 ungesättigte Stellen umfasst.

17. Verfahren nach Anspruch 16, **dadurch gekennzeichnet, dass** das mehrfach ethylenisch ungesättigte Monomer zwei oder drei ethylenisch ungesättigte Stellen umfasst.

18. Verfahren nach einem beliebigen der Ansprüche 15 bis 17, **dadurch gekennzeichnet, dass** das mehrfach ethylenisch ungesättigte Monomer aus den Acryl-, Methacryl-, Acrylamido-, Methacrylamido-, Vinylester-, Vinylether-, Dien-, Styrol-, alpha-Methylstyrol- und Allylderivaten ausgewählt ist.

19. Verfahren nach einem beliebigen der Ansprüche 15 bis 18, **dadurch gekennzeichnet, dass** das mehrfach ethylenisch ungesättigte Monomer darüber hinaus, neben den ethylenisch ungesättigten Stellen, eine oder mehrere funktionelle Gruppen umfasst, die aus den funktionellen Hydroxyl-, Carboxyl-, Ester-, Amid-, Amino- oder substituierten Amino-, Mercapto-, Silan-, Epoxy- oder Halogengruppen ausgewählt sind.

20. Verfahren nach einem beliebigen der Ansprüche 15 bis 19, **dadurch gekennzeichnet, dass** das mehrfach ethylenisch ungesättigte Monomer aus Divinylbenzol und den Derivaten von Divinylbenzol, Vinylmethacrylat, Methacrylsäureanhydrid, Allylmethacrylat, Ethylenglykoldimethacrylat, Phenylendimethacrylat, Diethylenglykoldimethacrylat, Triethylenglykoldimethacrylat, Tetraethylenglykoldimethacrylat, Polyethylenglykol-200-dimethacrylat, Polyethylenglykol-400-dimethacrylat, Butandiol-1,3-dimethacrylat, Butandiol-1,4-dimethacrylat, Hexandiol-1,6-dimethacrylat, Dodecandiol-1,12-dimethacrylat, Glycerin-1,3-dimethacrylat, Diurethandimethacrylat, Trimethylolpropantrimethacrylat; Vinylacrylat, Bisphenol-A-epoxydiacrylat, Dipropylenglykoldiacrylat, Tripropylenglykoldiacrylat, Polyethylenglykol-600-diacrylat, Ethylenglykoldiacrylat, Diethylenglykoldiacrylat, Triethylenglykoldiacrylat, Tetraethylenglykoldiacrylat, Diacrylat von ethoxyliertem Neopentylglykol, Butandioldiacrylat, Hexandioldiacrylat, aliphatischem Urethandiacrylat, Trimethylolpropantriacrylat, Triacrylat von ethoxyliertem Trimethylolpropan, Triacrylat von propoxyliertem Trimethylolpropan, Triacrylat von propoxyliertem Glycerin, aliphatischem Urethantriacrylat, Trimethylolpropantetraacrylat, Dipentaerytritpentaacrylat; Vinylcrotonat, Diethylenglykoldivinylether, Butandiol-1,4-divinylether, Triethylenglykoldivinylether; Diallylphthalat, Diallyldimethylammoniumchlorid, Diallylmalleat, Natriumdiallyloxyacetat, Diallylphenylphosphin, Diallylpyrocarbonat, Diallylsuccinat, N,N'-Diallyltartardiamid, N,N-Diallyl-2,2,2-trifluoracetamid, Diallyloxyessigsäureallylester, 1,3-Diallylharstoff, Triallylamin, Triallyltrimesat, Triallylcyanurat, Triallyltrimellitat, Triallyl-1,3,5-triazin-2,4,6-(1H,3H,5H)-trion; N,N'-Methylenbisacrylamid, N,N'-Methylenbismethacrylamid, Glyoxalbisacrylamid, Diacrylamidoessigsäure; Divinylbenzol und 1,3-Diisopropenylbenzol; Butadien, Chloropren oder Isopren ausgewählt ist.

21. Verfahren nach einem beliebigen der Ansprüche 15 bis 20, **dadurch gekennzeichnet, dass** das mehrfach ethylenisch ungesättigte Monomer aus N,N'-Methylenbisacrylamid, Divinylbenzol, Ethylenglykoldiacrylat oder Trimethylolpropantriacrylat ausgewählt ist.

22. Verfahren nach einem beliebigen der Ansprüche 1 bis 8, **dadurch gekennzeichnet, dass** der molare Anteil an mehrfach ethylenisch ungesättigten Monomeren, bezogen auf die einfach ethylenisch ungesättigten Monomere, im Bereich von 0,001 bis 1 liegt.

23. Verfahren nach einem beliebigen der Ansprüche 1 bis 22, **dadurch gekennzeichnet, dass** das Polymer in einem wässrigen oder organischen Lösungsmittel in Lösung vorliegt.

24. Verfahren nach einem beliebigen der Ansprüche 1 bis 22, **dadurch gekennzeichnet, dass** das Polymer in Wasser oder einem Lösungsmittel oder einer Mischung von Lösungsmitteln in Dispersion vorliegt.

25. Verfahren nach einem beliebigen der Ansprüche 1 bis 22, **dadurch gekennzeichnet, dass** das Polymer in wässriger Emulsion (Latex) vorliegt.

26. Verfahren nach Anspruch 24, **dadurch gekennzeichnet, dass** die Partikelgröße der Dispersion im Bereich von ungefähr 10 bis ungefähr 50000 Nanometer liegt.

27. Verfahren nach Anspruch 25, **dadurch gekennzeichnet, dass** die Partikelgröße der wässrigen Emulsion im Bereich von ungefähr 10 bis ungefähr 500 Nanometer liegt.

28. Verfahren nach einem beliebigen der Ansprüche 1 bis 27, **dadurch gekennzeichnet, dass** das Polymer im Gegenstrom mit dem Ozon in Kontakt gebracht wird.

29. Polymer, das durch das Verfahren gemäß einem beliebigen der Ansprüche 1 und 28 erhalten wurde.

## Claims

1. Process for partially or completely oxidizing one or more thiocarbonylthio ends of a polymer resulting from a radical polymerization controlled by reversible addition-fragmentation using thiocarbonylthio agents which comprises a stage in which said polymer is brought into contact with an ozone-comprising gas, during which the ozone reacts with the thiocarbonylthio end or ends.

2. Process according to Claim 1, **characterized in that** the ozone-comprising gas is air, helium, oxygen, argon, carbon dioxide, nitrogen or a mixture of these gases.

3. Process according to either one of Claims 1 and 2, **characterized in that** the ozone-comprising gas comprises from approximately 0.01% by weight to approximately 8% by weight of ozone, with respect to the total weight of gases.

4. Process according to any one of Claims 1 to 3, **characterized in that** the molar ratio of the ozone to the thiocarbonylthio is between approximately 10 000:1 and approximately 1:100.

5. Process according to Claim 4, **characterized in that** the molar ratio of the ozone to the thiocarbonylthio is between approximately 1000:1 and approximately 1:10.

6. Process according to either one of Claims 4 and 5, **characterized in that** the molar ratio of the ozone to the thiocarbonylthio is between approximately 100:1 and approximately 1:1.

7. Process according to any one of Claims 1 to 6, **characterized in that** the thiocarbonylthio compound is a compound which can be of following formula (A), (B) or (C) : 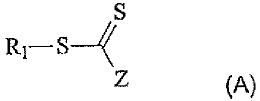 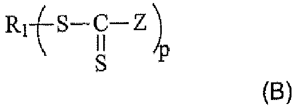 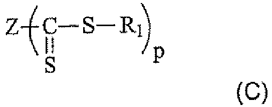 in which:
- Z represents:
• a hydrogen atom,
• a chlorine atom,
• an optionally substituted alkyl radical or an optionally substituted aryl radical,
• an optionally substituted heterocycle,
• an optionally substituted alkylthio radical,
• an optionally substituted arylthio radical,
• an optionally substituted alkoxy radical,
• an optionally substituted aryloxy radical,
• an optionally substituted amino radical,
• an optionally substituted hydrazine radical,
• an optionally substituted alkoxycarbonyl radical,
• an optionally substituted aryloxycarbonyl radical,
• a carboxyl or optionally substituted acyloxy radical,
• an optionally substituted aroyloxy radical,
• an optionally substituted carbamoyl radical,
• a cyano radical,
• a dialkyl- or diaryl-phosphonato radical,
• a dialkyl-phosphinato or diaryl-phosphinato radical, or
• a polymer chain,
- R₁ represents:
• an optionally substituted alkyl, acyl, aryl, aralkyl, alkenyl or alkynyl group,
• an optionally substituted, aromatic, saturated or unsaturated, carbon ring or heterocycle, or
• a polymer chain, and
- p represents a number between 2 and 10.

8. Process according to Claim 7, **characterized in that** the thiocarbonylthio compounds are xanthate, dithiocarbamate, dithioester, dithiocarbazate or trithiocarbonate compounds.

9. Process according to Claim 8, **characterized in that** the compounds are xanthates.

10. Process according to any one of Claims 1 to 9, **characterized in that** the polymer comprises from approximately 0.01% to approximately 35% by weight of thiocarbonylthio before contact with the ozone-comprising gas.

11. Process according to any one of Claims 1 to 10, **characterized in that** the polymer comprises from approximately 80% to 0% by weight of thiocarbonylthio with respect to the initial weight of thiocarbonylthio after contact with the ozone-comprising gas.

12. Process according to any one of Claims 1 to 11, **characterized in that** the polymer is a homopolymer or a copolymer of ethylenically unsaturated monomer(s).

13. Process according to Claim 12, **characterized in that** the ethylenically unsaturated monomers are monoethylenically unsaturated monomers chosen from:
- styrene and styrene derivatives, such as α-methylstyrene or vinyltoluene,
- carboxylic acid vinyl esters, such as vinyl acetate, vinyl Versatate® or vinyl propionate,
- vinyl and vinylidene halides,
- unsaturated ethylenic mono- and dicarboxylic acids, such as acrylic acid, methacrylic acid, itaconic acid, maleic acid or fumaric acid, and the monoalkyl esters of the dicarboxylic acids of the type mentioned with alkanols preferably having 1 to 4 carbon atoms and their N-substituted derivatives,
- amides of unsaturated carboxylic acids, such as acrylamide, methacrylamide, N-methylolacrylamide, N-methylolmethacrylamide or N-alkylacrylamides,
- ethylenic monomers comprising a sulfonic acid group and its alkali metal or ammonium salts, for example vinylsulfonic acid, vinylbenzenesulfonic acid, α-acrylamidomethylpropanesulfonic acid or 2-sulfoethylene methacrylate,
- amides of vinylamine, in particular vinylformamide, vinylacetamide, N-vinylpyrrolidone and N-vinylcaprolactam,
- unsaturated ethylenic monomers comprising a secondary, tertiary or quaternary amino group or a heterocyclic group comprising nitrogen, such as, for example, vinylpyridines, vinylimidazole, aminoalkyl (meth)acrylates and aminoalkyl-(meth)acrylamides, such as dimethylaminoethyl acrylate, dimethylaminoethyl methacrylate, di(tert-butyl)aminoethyl acrylate, di(tert-butyl)-aminoethyl methacrylate, dimethylaminomethylacrylamide or dimethylaminomethylmethacrylamide, or zwitterionic monomers, such as, for example, sulfopropyl(dimethyl)aminopropyl acrylate,
- (meth)acrylic esters, such as glycidyl acrylate or glycidyl methacrylate,
- vinyl nitriles,
- monomers comprising at least one boronate functional group or one precursor, for example chosen from acryloylbenzeneboronic acid, methacryloylbenzeneboronic acid, 4-vinylbenzeneboronic acid, 3-acrylamidophenylboronic acid or 3-methacrylamidophenylboronic acid, alone or as mixtures, or in the form of salts,
- monomers comprising phosphonates, for example chosen from N-methacrylamidomethylphosphonic acid ester derivatives, in particular the n-propyl ester (RN 31857-11-1), the methyl ester (RN 31857-12-2), the ethyl ester (RN 31857-13-3), the n-butyl ester (RN 31857-14-4) or the isopropyl ester (RN 51239-00-0), and their phosphonic monoacid and diacid derivatives, such as N-methacrylamidomethylphosphonic diacid (RN 109421-20-7); N-methacrylamidoethylphosphonic acid ester derivatives, such as N-methacrylamidoethylphosphonic acid dimethyl ester (RN 266356-40-5) or N-methacrylamidoethylphosphonic acid di(2-butyl-3,3-dimethyl) ester (RN 266356-45-0), and their phosphonic monoacid and diacid derivatives, such as N-methacrylamidoethylphosphonic diacid (RN 80730-17-2); N-acrylamidomethylphosphonic acid ester derivatives, such as N-acrylamidomethylphosphonic acid dimethyl ester (RN 24610-95-5), N-acrylamidomethylphosphonic acid diethyl ester (RN 24610-96-6) or bis(2-chloropropyl) N-acrylamidomethylphosphonate (RN 50283-36-8), and their phosphonic monoacid and diacid derivatives, such as N-acrylamidomethylphosphonic acid (RN 151752-38-4); the vinylbenzylphosphonate dialkyl ester derivatives, in particular the di(n-propyl) (RN 60181-26-2), di(isopropyl) (RN 159358-34-6), diethyl (RN 726-61-4), dimethyl (RN 266356-24-5), di(2-butyl-3,3-dimethyl) (RN 266356-29-0) and di(t-butyl) (RN 159358-33-5) ester derivatives, and their phosphonic monoacid and diacid alternative forms, such as vinylbenzylphosphonic diacid (RN 53459-43-1); diethyl 2-(4-vinylphenyl)-ethanephosphonate (RN 61737-88-0); dialkylphosphonoalkyl acrylate and methacrylate derivatives, such as 2-(acryloyloxy)ethylphosphonic acid dimethyl ester (RN 54731-78-1) and 2-(methacryloyloxy)ethylphosphonic acid dimethyl ester (RN 22432-83-3), 2-(methacryloyloxy)methylphosphonic acid diethyl ester (RN 60161-88-8), 2-(methacryloyloxy)methylphosphonic acid dimethyl ester (RN 63411-25-6), 2-(methacryloyloxy)propylphosphonic acid dimethyl ester (RN 252210-28-9), 2-(acryloyloxy)methylphosphonic acid diisopropyl ester (RN 51238-98-3) or 2-(acryloyloxy)ethylphosphonic acid diethyl ester (RN 20903-86-0), and their phosphonic monoacid and diacid alternative forms, such as 2-(methacryloyloxy)ethylphosphonic acid (RN 80730-17-2), 2-(methacryloyloxy)methylphosphonic acid (RN 87243-97-8), 2-(methacryloyloxy)propylphosphonic acid (RN 252210-30-3), 2-(acryloyloxy)propylphosphonic acid (RN 254103-47-4) and 2-(acryloyloxy)ethylphosphonic acid; vinylphosphonic acid, optionally substituted by cyano, phenyl, ester or acetate groups, vinylidenephosphonic acid, in the sodium salt form or the form of its isopropyl ester, or bis(2-chloroethyl)vinylphosphonate, it being possible for these monomers comprising a phosphonic mono- or diacid functional group to be used in the partially or completely neutralized form, optionally neutralized by an amine, for example dicyclohexylamine,
- monomers chosen from the phosphate analogs of the phosphonate-comprising monomers described above, the monomers then comprising a -C-O-P- sequence in comparison with the -C-P- sequence of the phosphonates, and
- monomers carrying an alkoxysilane group chosen from trimethoxysilylpropyl methacrylate, triethoxysilylpropyl methacrylate, tributoxysilylpropyl methacrylate, dimethoxymethylsilylpropyl methacrylate, diethoxymethylsilylpropyl methacrylate, dibutoxymethylsilylpropyl methacrylate, diisopropoxymethylsilylpropyl methacrylate, dimethoxysilylpropyl methacrylate, diethoxysilylpropyl methacrylate, dibutoxysilylpropyl methacrylate, diisopropoxysilylpropyl methacrylate, trimethoxysilylpropyl methacrylate, triethoxysilylpropyl methacrylate, tributoxysilylpropyl methacrylate, trimethoxysilylpropyl acrylate, triethoxysilylpropyl acrylate, tributoxysilylpropyl acrylate, dimethoxymethylsilylpropyl acrylate, diethoxymethylsilylpropyl acrylate, dibutoxymethylsilylpropyl acrylate, diisopropoxymethylsilylpropyl acrylate, dimethoxysilylpropyl acrylate, diethoxysilylpropyl acrylate, dibutoxysilylpropyl acrylate, diisopropoxysilylpropyl acrylate, trimethoxysilylpropyl acrylate, triethoxysilylpropyl acrylate or tributoxysilylpropyl acrylate, or their mixture.

14. Process according to either one of Claims 12 and 13, **characterized in that** the ethylenically unsaturated monomers are chosen from styrene monomers, vinyl esters, neutral or charged hydrophilic acrylates, hydrophobic acrylates, neutral or charged hydrophilic methacrylates, hydrophobic methacrylates, hydrophilic or hydrophobic and neutral or charged acrylamido derivatives, hydrophilic or hydrophobic and neutral or charged methacrylamido derivatives, or their mixtures.

15. Process according to Claim 12, **characterized in that** a fraction of the ethylenically unsaturated monomers are chosen from polyethylenically unsaturated monomers.

16. Process according to Claim 15, **characterized in that** the polyethylenically unsaturated monomer comprises at least two ethylenic unsaturations and at most 10 unsaturations.

17. Process according to Claim 16, **characterized in that** the polyethylenically unsaturated monomer comprises two or three ethylenic unsaturations.

18. Process according to any one of Claims 15 to 17, **characterized in that** the polyethylenically unsaturated monomer is chosen from acrylic, methacrylic, acrylamido, methacrylamido, vinyl ester, vinyl ether, diene, styrene, α-methylstyrene and allyl derivatives.

19. Process according to any one of Claims 15 to 18, **characterized in that** the polyethylenically unsaturated monomer additionally comprises one or more functional groups other than ethylenic unsaturations chosen from the hydroxyl, carboxyl, ester, amide, amino, substituted amino, mercapto, silane, epoxy or halo functional groups.

20. Process according to any one of Claims 15 to 19, **characterized in that** the polyethylenically unsaturated monomer is chosen from divinylbenzene and divinylbenzene derivatives, vinyl methacrylate, methacrylic acid anhydride, allyl methacrylate, ethylene glycol dimethacrylate, phenylene dimethacrylate, diethylene glycol dimethacrylate, triethylene glycol dimethacrylate, tetraethylene glycol dimethacrylate, polyethylene glycol 200 dimethacrylate, polyethylene glycol 400 dimethacrylate, 1,3-butanediol dimethacrylate, 1,4-butanediol dimethacrylate, 1,6-hexanediol dimethacrylate, 1,12-dodecanediol dimethacrylate, 1,3-glycerol dimethacrylate, diurethane dimethacrylate or trimethylolpropane trimethacrylate; vinyl acrylate, bisphenol A epoxy diacrylate, dipropylene glycol diacrylate, tripropylene glycol diacrylate, polyethylene glycol 600 diacrylate, ethylene glycol diacrylate, diethylene glycol diacrylate, triethylene glycol diacrylate, tetraethylene glycol diacrylate, neopentyl glycol ethoxylate diacrylate, butanediol diacrylate, hexanediol diacrylate, aliphatic urethane diacrylate, trimethylolpropane triacrylate, trimethylolpropane ethoxylate triacrylate, trimethylolpropane propoxylate triacrylate, glycerol propoxylate triacrylate, aliphatic urethane triacrylate, trimethylolpropane tetraacrylate or dipentaerythritol pentaacrylate; vinyl crotonate, diethylene glycol divinyl ether, 1,4-butanediol divinyl ether or triethylene glycol divinyl ether; diallyl phthalate, diallyl-dimethylammonium chloride, diallyl maleate, sodium diallyloxyacetate, diallylphenylphosphine, diallyl pyrocarbonate, diallyl succinate, N,N'-diallyl-tartardiamide, N,N-diallyl-2,2,2-trifluoroacetamide, the allyl ester of diallyloxyacetic acid, 1,3-diallylurea, triallylamine, triallyl trimesate, triallyl cyanurate, triallyl trimellitate or 1,3,5-tri-allyltriazine-2,4,6(1H,3H,5H)-trione; N,N'-methylenebisacrylamide, N,N'-methylenebismethacrylamide, glyoxalbisacrylamide or diacrylamidoacetic acid; divinylbenzene and 1,3-diisopropenylbenzene; butadiene, chloroprene or isoprene.

21. Process according to any one of Claims 15 to 20, **characterized in that** the polyethylenically unsaturated monomer is chosen from N,N'-methylenebisacrylamide, divinylbenzene, ethylene glycol diacrylate or trimethylolpropane triacrylate.

22. Process according to any one of Claims 1 to 8, **characterized in that** the molar fraction of polyethylenically unsaturated monomers with respect to the monoethylenically unsaturated monomers is between 0.001 and 1.

23. Process according to any one of Claims 1 to 22, **characterized in that** the polymer is in solution in an aqueous or organic solvent.

24. Process according to any one of Claims 1 to 22, **characterized in that** the polymer is in dispersion in water or a solvent or a mixture of solvents.

25. Process according to any one of Claims 1 to 22, **characterized in that** the polymer is in aqueous emulsion (latex).

26. Process according to Claim 24, **characterized in that** the particle size of the dispersion is between approximately 10 and approximately 50 000 nanometers.

27. Process according to Claim 25, **characterized in that** the particle size of the aqueous emulsion is between approximately 10 and approximately 500 nanometers.

28. Process according to any one of Claims 1 to 27, **characterized in that** the polymer is brought into contact with the ozone countercurrentwise.

29. Polymer obtained by the process according to any one of Claims 1 to 28.
